# EUROPÄISCHE PATENTSCHRIFT

(11) **EP 2 342 111 B1**
(45) Veröffentlichungstag und Bekanntmachung des Hinweises auf die Patenterteilung: **06.11.2013**
(21) Anmeldenummer: 09736124.0
(22) Anmeldetag: 23.09.2009
(51) Int. Cl.: B60T 17/04, B60T 13/26, B60T 13/68

(54) **BREMS- SOWIE ZUSATZGERÄTEANORDNUNG EINER PNEUMATISCHEN BREMSANLAGE EINES FAHRZEUGES**
BRAKE- AND AUXILIARY DEVICE ARRANGEMENT OF A PNEUMATIC BRAKE SYSTEM OF A VEHICLE
DISPOSITIF DE FREIN ET D'APPAREILS AUXILIAIRES D'UN SYSTÈME DE FREIN PNEUMATIQUE D'UN VÉHICULE À MOTEUR

(30) Priorität: 23.09.2008 DE 102008048561
(43) Veröffentlichungstag der Anmeldung: 13.07.2011
(73) Patentinhaber: KNORR-BREMSE Systeme für Schienenfahrzeuge GmbH, 80809 München (DE)
(72) Erfinder: MANN, Hartmut, 85232 Bergkirchen (DE); ERNST, Thomas, 82275 Emmering (DE); WACH, Jörg-Johannes, 81247 München (DE)
(74) Vertreter: Schönmann, Kurt
(86) Internationale Anmeldenummer: PCT/EP2009/006862
(87) Internationale Veröffentlichungsnummer: WO 2010/034477

(56) Entgegenhaltungen:
- DE-A1- 19 908 617
- DE-A1-102008 009 217
- DE-U- 1 905 561
- US-A- 5 988 766

## Beschreibung

Die vorliegende Erfindung betrifft eine Ventilanordnung zur Brems- sowie Zusatzgerätesteuerung einer pneumatischen Bremsanlage eines Fahrzeuges mit pneumatischen Steuerventilen und anderen pneumatischen Komponenten zur Durchführung von Brems- oder Bremszusatzfunktionen der Bremsanlage.

Das Einsatzgebiet der vorliegenden Erfindung erstreckt sich vornehmlich auf den Schienenfahrzeugbau. Eine druckluftbetriebene Bremsanlage eines Schienenfahrzeuges hat neben der Erfüllung ihrer Hauptfunktion, der Bremsung, auch Zusatzfunktionen zu erfüllen, wie die Realisierung einer Parkbremsung, Magnetschienensteuerung, Luftfedersteuerung, Sandungssteuerung und dergleichen. All diese Bremszusatzfunktionen werden gerätetechnisch neben der Bremssteuerung unter Zuhilfenahme peripherer Geräte, wie Steuerventile, Drucksensoren, Filterelemente und dergleichen realisiert.

Aus der DE 1 905 561 U 1 geht eine pneumatische Bremsanlage für Schienenfahrzeuge hervor, bei der auf einem Ventilträger ein Bremssteuerventil angeflanscht ist. Die Druckluftversorgung des Bremssteuerventils erfolgt dabei über Kanäle innerhalb des Ventilträgers, welche von einer Hauptluftleitung gespeist werden. Über Rohrleitungen, die vom Ventilträger ausgehen, ist das Bremssteuerventil mit einem Hilfsluftbehälter und einem Bremszylinder verbunden. Von der Hauptluftleitung führt eine weitere Zweigleitung zu einem weiteren Ventilträger, an welchem Zusatzgeräte der Bremsanlage angeflanscht sind, hier ein Absperrhahn, ein Rückschlagventil und ein Rückschlagventil, die eine Überwachvorrichtung für die Füllung des Hilfsluftbehälters bilden. Durch die Ventilträger lassen sich die hierauf montierten Brems- sowie Zusatzgeräte in einfacher Weise montieren oder demontieren und es ist bei günstiger Befestigung des Ventilträgers in einem Rahmen oder am Fahrzeug eine gute Zugänglichkeit zu den Geräten gegeben.

Nachteilhaft bei dieser technischen Lösung ist jedoch, dass herkömmliche Trägerplatten in geräteindividueller Bohr- oder Frästafelausführung realisiert werden, um die internen Druckluftkanäle auszubilden, so dass die gewünschten Anschlüsse realisierbar sind. Dies führt zu einer aufwendigen Einzelanfertigung solcher Ventilträger, die je nach kundenwunschbedingter Bestückung mit Brems- bzw. Zusatzgeräten variiert.

Um diesen Fertigungsaufwand zu minimieren ist es bereits versucht worden, einzelne Ventilträgerplatten mit Brems- oder Zusatzgeräten so zu bestücken, dass diese mit gleichem Flanschbild untereinander tauschbar sind und somit unterschiedlicher Funktionsabläufe auf dem selben Grundkörper ausführen können. Da jedoch die geometrischen Abmessungen der üblichen Brems- sowie Zusatzgeräten sehr unterschiedlich sind, müssen bei einer derartigen Lösung erheblich mehr Grundkörper bereitgestellt werden.

Dokument DE 199 08617 A1 offenbart eine Bremsgeräteanordnung gemäß dem Oberbegriff des Anspruchs 1.

Es ist daher die Aufgabe der vorliegenden Erfindung in Anpassung an vorhandene Baugrößen von Brems- sowie Zusatzgeräte pneumatischer Bremsanlagen eine weitestgehend modularen Aufbau zur Darstellung vieler verschiedener Konfigurationsvarianten zu schaffen.

Die Aufgabe wird ausgehend von einer Brems- sowie Zusatzgeräteanordnung gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass zur Realisierung eines modularen Aufbaus ein auf einem Träger vormontiertes Bremssteuermodul zur Bremsdruckerzeugung mit einem Filtermodul zur eingangsseitigen Druckluftaufbereitung sowie zumindest ein Zusatzmodul zur Erfüllung von Bremszusatzfunktionen durch direkte Aneinanderreihung miteinander kombiniert sind.

Der Vorteil einer solchen modularen Anordnung liegt insbesondere darin, dass sich Zusatzmodule durch bloße Aneinanderreihung zur Verwirklichung beliebiger Varianten hinzufügen lassen, so dass Bremszusatzfunktionen, wie Parkbremssteuerung, Luftfedersteuerung, Magnetschienensteuerung, Sandungssteuerung, Phantographensteuerung, Gleitschutzsteuerung und dergleichen in einfacher Weise je nach Kundenwunsch realisierbar sind.

Dabei liegt das Filtermodul vorzugsweise zwischen dem Bremssteuermodul und dem mindestens einem hieran angekoppelten Zusatzmodul. Eine derartige Anwendung garantiert kurze Leitungswege zum Bremsmodul hin und gleichzeitig auch zu den Zusatzmodulen. Hierdurch wird erreicht, dass die Druckluftversorgung im optimalen Mittelbereich der aneinandergereihten Brems- sowie Zusatzgeräte erfolgt.

Sollte die vorstehend beschriebene erfindungsgemäße Brems- sowie Zusatzgeräteanordnung nicht von einer zentralen elektronischen Steuereinheit des Fahrzeuges angesteuert werden, so wird vorgeschlagen, ein eigenes elektronisches Steuermodul an dem dem Filtermodul gegenüberliegenden Ende des Bremssteuermoduls anzuordnen. Das elektronische Steuermodul liegt insoweit an einer Stirnseite der durch Aneinanderreihung gekoppelten einzelnen Module und ist insoweit von außen her zu Anschlusszwecken gut zugänglich.

Vorzugsweise sollte der Träger, auf welchem die verschiedenen Brems- sowie Zusatzgeräte montiert sind, plattenförmig ausgebildet sein, um eine stabile Befestigung der verschieden großen Geräte zu ermöglichen. Es ist jedoch auch denkbar, einen schienenförmigen Träger zu verwenden, falls bauliche Randbedingungen der Geräte dies vorteilhaft erscheinen lassen.

Das im Rahmen der vorliegenden Erfindung zum Einsatz kommende Bremssteuermodul umfasst vorzugsweise mindestens ein Steuerventil für den Bremsdruck, ein Druckbegrenzungsventil sowie diverse Drucksensoren und Magnetventile, die im Rahmen der Bremssteuerung herkömmlicherweise erforderlich sind.

Das erfindungsgemäße Filtermodul ist mit einem zentralen Zuluftanschluss der R-Leitung versehen und weist vorzugsweise einen Druckluftfilter, ein Rückschlagventil sowie einen auslassseitigen Absperrhahn, auf. Letzterer dient zum Sperren des Zuflusses zum Brennsteuermodul hin, falls steuerungstechnische Aufgaben dies erfordern. Dagegen besteht eine permanente Verbindung zu den Zusatzmodulen.

Als exemplarisches Zusatzmodul sei an dieser Stelle ein Luftfederungssteuerungsmodul genannt, das beispielsweise ein Rückschlagventil, ein Überströmventil sowie einen auslassseitigen Absperrhahn aufweist.

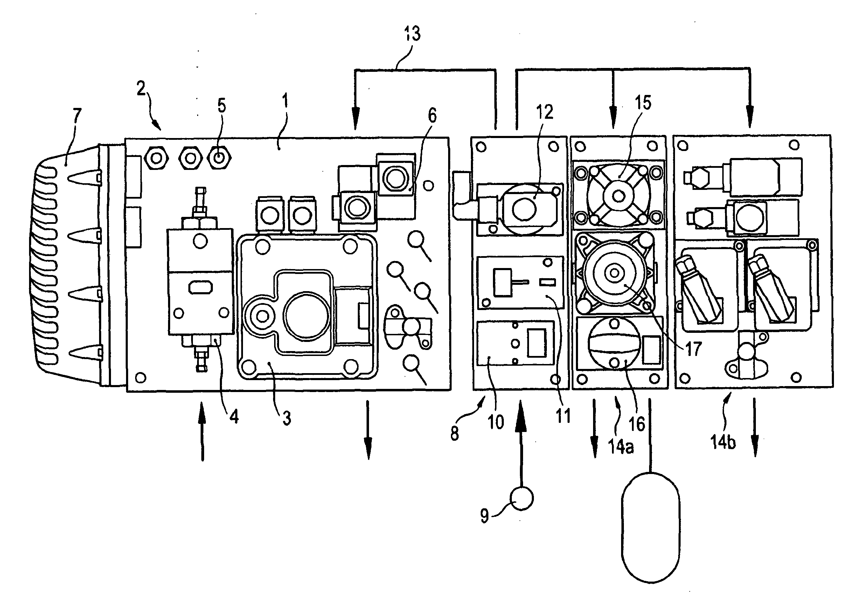

Weitere, die Erfindung verbessernden Maßnahmen werden nachstehend gemeinsam mit der Beschreibung eines bevorzugten Ausführungsbeispiels der Erfindung anhand der einzigen Figur näher dargestellt.

Die Figur zeigt eine Vorderansicht auf eine schematische Darstellung einer modular aufgebauten Brems- sowie Zusatzgeräteanordnung.

Gemäß Figur ist ein auf einem plattenförmigen Träger 1 vormontiertes Bremssteuermodul 2 vorgesehen, das hier ein Steuerventil 3, Druckbegrenzungsventil 4, Drucksensoren 5 und einen Magnetventil 6 als Bremsgeräte umfasst. Die elektrische Ansteuerung des Bremssteuermodul 2 erfolgt über ein direkt stirnseitig hieran angeordnetes elektronisches Steuermodul 7. An dem dem elektronischen Steuermodul 7 gegenüberliegenden Ende des Bremssteuermoduls 2 ist ein Filtermodul 8 angeordnet, welches die zentrale Druckluftversorgung übernimmt. Das Filtermodul 8 umfasst benachbart zu einem Druckluftanschluss 9 einen Druckluftfilter 10, dem ein Rückschlagventil 11 folgt. Auslassseitig des Filtermoduls 8 ist ein Absperrhahn 12 vorgesehen. Der Absperrhahn 12 dient dem wahlweise Blockieren einer Steuerluftleitung 13 zum Bremssteuermodul 2 hin.

Benachbart zum Filtermodul 8 ist als Zusatzmodul 14a ein Luftfedersteuerungsmodul vorgesehen. Das Zusatzmodul 14a umfasst ein Überströmventil 15, ein Absperrhahn 16 sowie einen auslassseitigen Druckminderventil 17. Zum Zusatzmodul 14a wiederum benachbart ist ein weiteres Zusatzmodul 14b angeordnet, auf dessen Zusatzgerät an dieser Stelle nicht mehr eingegangen wird.

### Bezugszeichenliste

- 1: Träger
- 2: Bremssteuermodul
- 3: Steuerventil
- 4: Druckbegrenzungsventil
- 5: Drucksensor
- 6: Magnetventil
- 7: Steuermodul
- 8: Filtermodul
- 9: Druckluftquelle
- 10: Druckluftfilter
- 11: Rückschlagventil
- 12: Absperrhahn
- 13: Steuerdruck
- 14: Zusatzmodul
- 15: Überströmventil
- 16: Absperrhahn
- 17: Druckminderventil

## Patentansprüche

1. Brems- sowie Zusatzgeräteanordnung einer pneumatischen Bremsanlage eines Fahrzeuges, umfassend pneumatische Steuerventile (3) und andere pneumatische Komponenten zur Durchführung von Brems- oder Bremszusatzfunktionen der Bremsanlage, **dadurch gekennzeichnet, dass** zur Realisierung eines modularen Aufbaus ein auf einem Träger (1) vormontiertes Bremssteuermodul (2) zur Bremsdruckerzeugung mit einem Filtermodul (8) zur eingangsseitigen Luftaufbereitung sowie mindestens ein Zusatzmodul (14a, 14b) zur Erfüllung von Bremszusatzfunktionen durch direkte Aneinanderreihung miteinander kombiniert sind, wobei das Filtermodul (8) zwischen dem Bremssteuermodul (2) und dem mindestens einem Zusatzmodul (14a, 14b) angeordnet ist.

2. Brems- sowie Zusatzgeräteanordnung nach Anspruch 1,
**dadurch gekennzeichnet, dass** an dem dem Filtermodul (8) gegenüberliegenden Ende des Bremssteuermoduls (2) ein elektronisches Steuermodul (7) angeordnet ist.

3. Brems- sowie Zusatzgeräteanordnung nach Anspruch 1,
**dadurch gekennzeichnet, dass** das Zusatzmodul (14a, 14b) zur Erfüllung mindestens einer Bremszusatzfunktion vorgesehen ist, die ausgewählt ist aus einer Gruppe, umfassend:
Parkbremssteuerung, Luftfedersteuerung, Magnetschienensteuerung, Sandungssteuerung, Phantographensteuerung, Gleitschutzsteuerung.

4. Brems- sowie Zusatzgeräteanordnung nach Anspruch 1,
**dadurch gekennzeichnet, dass** das Bremssteuermodul (2) mindestens ein Steuerventil (3), ein Druckbegrenzungsventil (4) sowie Drucksensoren (5) und Magnetventile (6) aufweist.

5. Brems- sowie Zusatzgeräteanordnung nach Anspruch 1,
**dadurch gekennzeichnet, dass** das Filtermodul (8) mindestens einen Druckluftfilter (10), ein Rückschlagventil (11) sowie einen auslassseitigen Absperrhahn (12) aufweist.

6. Brems- sowie Zusatzgeräteanordnung nach Anspruch 1,
**dadurch gekennzeichnet, dass** das Zusatzmodul (14a) als ein Luftfedersteuerungsmodul ausgebildet ist, aufweisend ein Überströmventil (15), ein Absperrhahn (16) sowie einen auslassseitigen Druckminderventil (17).

7. Brems- sowie Zusatzgeräteanordnung nach einem der vorstehenden Ansprüche,
**dadurch gekennzeichnet, dass** der Träger (1) plattenförmig oder schienenförmig ausgebildet ist.

## Claims

1. Brake device and auxiliary device arrangement of a pneumatic brake system of a vehicle, said arrangement comprising pneumatic control valves (3) and other pneumatic components for performing braking functions or auxiliary braking functions of the brake system, **characterised in that**, in order to produce a modular construction, a brake control module (2), preassembled on a support (1), for generating brake pressure, a filter module (8) for inlet-side compressed air processing and at least one auxiliary module (14a, 14b) for fulfilling auxiliary braking functions are combined with one another, the filter module (8) being located between the brake control module (2) and the at least one auxiliary module (14a, 14b).

2. Brake device and auxiliary device arrangement according to claim 1,
**characterised in that** an electronic control module (7) is arranged at the end of the brake control module (2) situated opposite the filter module (8).

3. Brake device and auxiliary device arrangement according to claim 1,
**characterised in that** the auxiliary module (14a, 14b) is intended to fulfil at least one auxiliary braking function, which is selected from a group comprising: parking brake control, air suspension control, electromagnetic rail control, sanding control, pantograph control, wheel slide control.

4. Brake device and auxiliary device arrangement according to claim 1,
**characterised in that** the brake control module (2) comprises at least one control valve (3), a pressure-limiting valve (4) and pressure sensors (5) and solenoid valves (6).

5. Brake device and auxiliary device arrangement according to claim 1,
**characterised in that** the filter module (8) comprises at least one compressed air filter (10), a non-return valve (11) and an outlet-side stopcock (12).

6. Brake device and auxiliary device arrangement according to claim 1,
**characterised in that** the auxiliary module (14a) is embodied as an air suspension control module, comprising an overflow valve (15), a stopcock (16) and an outlet-side pressure-reducing valve (17).

7. Brake device and auxiliary device arrangement according to any of the preceding claims,
**characterised in that** the support (1) is of plate-shaped or rail-shaped design.

## Revendications

1. Agencement de frein ainsi que d'appareils accessoires d'un système de frein pneumatique d'un véhicule, comprenant des vannes (3) pneumatiques de commande et d'autres composants pneumatiques, pour effectuer des fonctions de freinage ou des fonctions accessoires de freinage du système de frein, **caractérisé en ce que**, pour réaliser une structure modulaire, un module (2) de commande de frein, pré-monté sur un support (1), est, pour la production d'une pression de freinage, combiné à un module (8) de filtre pour la préparation d'air du côté de l'entrée ainsi qu'à au moins un module (14a, 14b) accessoire, pour remplir des fonctions accessoires de freinage, en les mettant directement les uns à côté des autres, le module (8) de filtre étant disposé entre le module (2) de commande de frein et le au moins un module (14a, 14b) accessoire.

2. Agencement de frein ainsi que d'appareils accessoires suivant la revendication 1,
**caractérisé en ce qu'**un module (7) électronique de commande est disposé à l'extrémité du module (2) de commande de frein opposée au module (8) de filtre.

3. Agencement de frein ainsi que d'appareils accessoires suivant la revendication 1,
**caractérisé en ce que** le module (14a, 14b) accessoire est prévu pour remplir au moins une fonction accessoire au freinage, qui est choisi dans un groupe comprenant :
commande de frein de stationnement, commande de suspension pneumatique, commande de rail magnétique, commande de sablage, commande de pantographe, commande d'anti-dérapage.

4. Agencement de frein ainsi que d'appareils accessoires suivant la revendication 1,
**caractérisé en ce que** le module (2) de commande de frein a au moins une vanne (3) de commande, une vanne (4) de limitation de la pression ainsi que des capteurs (5) de pression et des électrovannes (6).

5. Agencement de frein ainsi que d'appareils accessoires suivant la revendication 1,
**caractérisé en ce que** le module (8) de filtre a au moins un filtre (10) d'air comprimé, un clapet anti-retour (11) ainsi qu'un robinet (12) d'arrêt du côté de la sortie.

6. Agencement de frein ainsi que d'appareils accessoires suivant la revendication 1,
**caractérisé en ce que** le module (14a) accessoire est constitué en module de commande de suspension pneumatique, comportant une vanne (15) de décharge, un robinet (16) d'arrêt ainsi qu'une vanne (17) d'abaissement de la pression du côté de la sortie.

7. Agencement de frein ainsi que d'appareils accessoires suivant l'une des revendications précédentes,
**caractérisé en ce que** le support (1) est en forme de plaque ou en forme de rail.
